# EUROPEAN PATENT SPECIFICATION

(11) **EP 2 573 345 B1**
(45) Date of publication and mention of the grant of the patent: **15.11.2017**
(21) Application number: 11783506.6
(22) Date of filing: 16.05.2011
(51) Int. Cl.: F01N 3/08, F01N 9/00, F02D 43/00, F02D 45/00, G01F 23/00, F01N 11/00

(54) **SCR SYSTEM**
SCR-SYSTEM
SYSTEME DE REDUCTION CATALYTIQUE SELECTIVE (SCR)

(30) Priority: 17.05.2010 JP 2010113746
(43) Date of publication of application: 27.03.2013
(73) Proprietor: Isuzu Motors, Ltd., Tokyo 140-8722 (JP)
(72) Inventor: MINEZAWA, Masanobu, Fujisawa-shi Kanagawa 252-8501 (JP); SAKUMOTO, Koji, Fujisawa-shi Kanagawa 252-8501 (JP); KAMIJYOU, Tomoyuki, Fujisawa-shi Kanagawa 252-8501 (JP)
(74) Representative: Schaumburg und Partner Patentanwälte mbB
(86) International application number: PCT/JP2011/061222
(87) International publication number: WO 2011/145572

(56) References cited:
- WO-A1-2008/038509
- JP-A- 57 211 514
- JP-A- 2005 031 030
- JP-A- 2005 147 118
- JP-A- 2009 156 134

## Description

### TECHNICAL FIELD

The present invention relates to an SCR system that purifies exhaust gas by injecting a urea aqueous solution to the exhaust gas of a diesel vehicle, and more particularly, to an SCR system that can rapidly cancel engine start prohibition after filling the urea aqueous solution as well as preventing improper indication of deficiency of the urea aqueous solution by variation in solution level in a urea aqueous solution tank and unwanted engine start prohibition.

### BACKGROUND ART

As an exhaust gas purifying system for purifying NOx in the exhaust gas of a diesel engine, an SCR system using a SCR (selective catalytic reduction) apparatus has been developed.

The SCR system supplies the urea aqueous solution to upstream of the exhaust gas of the SCR apparatus, generates ammonia by heat of the exhaust gas, and reduces and purifies NOx on an SCR catalyst by the ammonia (see, for example, Patent Document 1).

### PRIOR ART DOCUMENTS

### PATENT DOCUMENTS

Patent Document 1: Japanese Patent Application Publication No. 2000-303826

### DISCLOSURE OF THE INVENTION

### PROBLEMS TO BE SOLVED BY THE INVENTION

A sufficient amount of urea aqueous solution needs to be retained in order for a vehicle to travel while continuously purifying the exhaust gas, and as a result, the urea aqueous solution tank is provided. A level sensor that detects a remaining amount of the urea aqueous solution is provided in the urea aqueous solution tank, and the remaining amount is indicated by meters. When the remaining amount is less than a lowerlimit value, the deficiency of the urea aqueous solution is indicated to warn a driver and prohibit the engine from being started, thereby preventing travelling in a state where the exhaust gas cannot be purified.

However, the level sensor is a sensor that detects the position of a float that floats on the solution level of the urea aqueous solution as a solution level height. Therefore, when vibration is generated in the vehicle, the solution level vibrates, and as a result, the detected remaining amount varies. A warning is given due to the variation in the solution level caused by the vibration of the vehicle or the engine cannot be started.

In order to solve the problems, for example, it is considered that an output signal of the level sensor is input through a lowpass filter. However, in order to remove a vibration component of the solution level from the output signal of the level sensor, a time constant of the lowpass filter may be several seconds. Therefore, the indication of the remaining amount on an actual solution level is followed with delay. As a result, for example, when the driver who verifies that the indication of the remaining amount indicates the deficiency of the urea aqueous solution fills the urea aqueous solution tank with the urea aqueous solution and thereafter, attempts starting the engine without delay, the indication of the remaining amount has yet indicated the deficiency of the urea aqueous solution, and as a result, there is a case in which the engine is not started. Although the urea aqueous solution is filled up, when the deficiency of the urea aqueous solution is indicated or the engine is not started, the driver feels a sense of strangeness. Further, when the urea aqueous solution is being filled up, if the indication of the remaining amount is not increased together, it may be misunderstood that the level sensor breaks down.

There is a case in which the remaining amount is also estimated in parallel by adding up an injection amount of the urea aqueous solution in addition to detecting an actual remaining amount of the urea aqueous solution tank by the level sensor. In this case, when the indication of the remaining amount by the level sensor rises, adding-up is initialized by misjudgment that the urea aqueous solution is filled up. Further, since the estimated remaining amount based on the adding-up of the injection amount of the urea aqueous solution is unilaterally reduced while the remaining amount detected by the level sensor varies, a difference between both parts occurs and management of the remaining amount becomes uncertain.

Accordingly, an object of the present invention is to solve the problems, and provide an SCR system that can rapidly cancel engine start prohibition after filling the urea aqueous solution as well as preventing improper indication of deficiency of the urea aqueous solution by variation in a solution level in a urea aqueous solution tank and unwanted engine start prohibition.

An SCR system according to the preamble of claim 1 is known from JP 2005 147118 A.

JP 57 211514 A discloses a system comprising a lowpass filter having a signal response characteristic in which a time constant is small when an engine rpm is low and the time constant is larger when the engine rpm is high.

### MEANS FOR SOLVING THE PROBLEMS

To achieve the object described above, an SCR system according to claim 1 is provided. The SCR system includes: a urea aqueous solution tank configured to retain a urea aqueous solution to be injected into an exhaust pipe of an engine; a level sensor configured to detect a solution level height in the urea aqueous solution tank; a lowpass filter having a signal response characteristic in which a time constant is small when an engine rpm is low and the time constant is larger when the engine rpm is high, with respect to an output signal of the level sensor; a remaining amount indicator configured to indicate a remaining amount of the urea aqueous solution based on an output signal of the level sensor processed by the lowpass filter; and a start prohibiting unit in deficiency of the urea aqueous solution configured to prohibit the engine from being started when the remaining amount of the urea aqueous solution is less than a lowerlimit value.

The time constant of the lowpass filter is 0 in the range of the engine rpm of 0 to a cranking rpm and may increase with the increase in the engine rpm over the cranking rpm.

### EFFECTS OF THE INVENTION

The present invention provides excellent effects as follows.
(1) Improper indication of deficiency of the urea aqueous solution by variation in a solution level in a urea aqueous solution tank and unwanted engine start prohibition are prevented.
(2) Engine start prohibition can be rapidly cancelled after filling the urea aqueous solution.

### BRIEF DESCRIPTION OF THE DRAWINGS

Fig. 1 is a configuration diagram of principal components of an SCR system according to an embodiment of the present invention.
Fig. 2 is a configuration diagram, in detail, illustrating the SCR system according to the embodiment of the present invention.
Fig. 3 is an input/output configuration diagram of the SCR system of Fig. 1.
Fig. 4 is a flowchart illustrating a sequence of filter processing according to the present invention.
Fig. 5 is a filter characteristic diagram of a lowpass filter used in the present invention.

### BEST MODES FOR CARRYING OUT THE INVENTION

Hereinafter, a preferred embodiment of the present invention will be described with reference to the accompanying drawings.

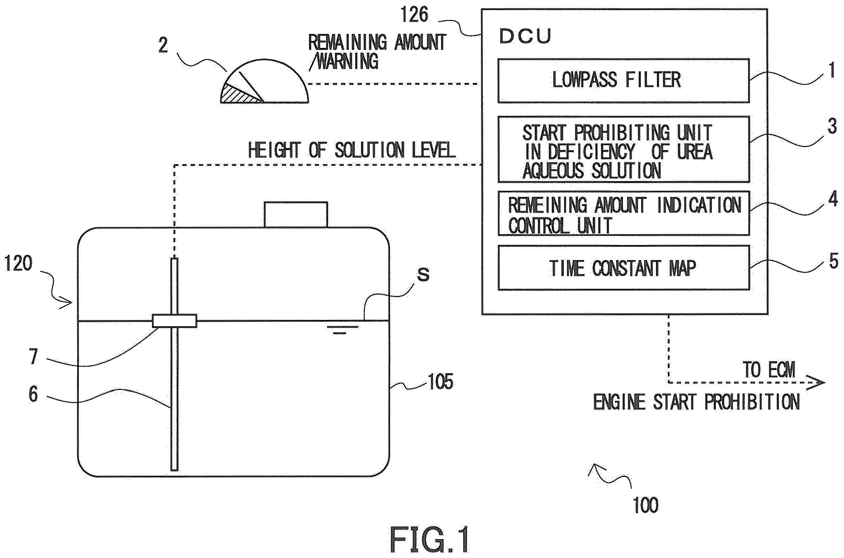

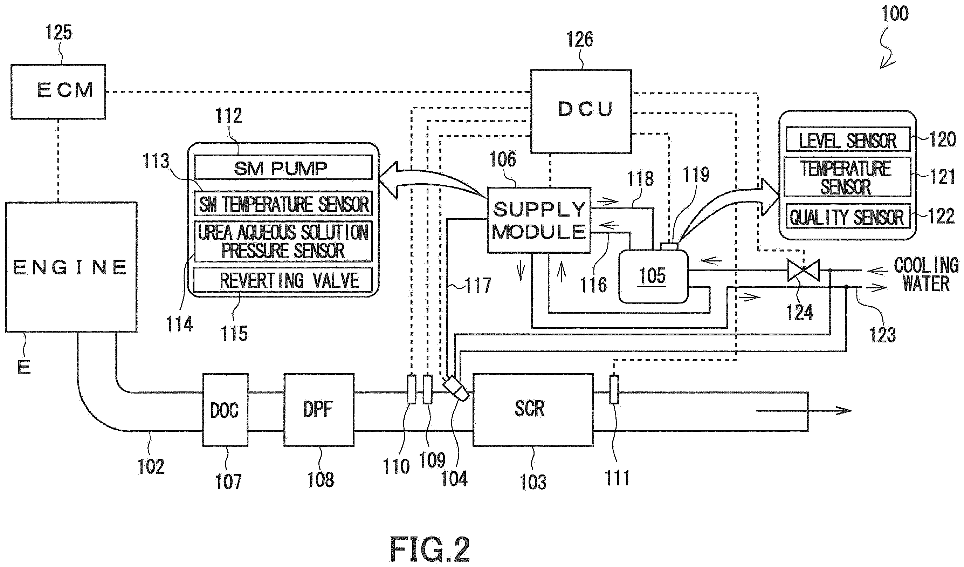

As illustrated in Figs. 1 and 2, an SCR system 100 according to the present invention includes a urea aqueous solution tank 105 configured to retain a urea aqueous solution to be injected into an exhaust pipe 102 of an engine E, a level sensor 120 configured to detect a solution level height in the urea aqueous solution tank 105, a lowpass filter 1 having a signal response characteristic in which a time constant is small when an engine rpm is low and the time constant is larger when the engine rpm is high with respect to an output signal of the level sensor 120, a remaining amount indicator 2 configured to indicate a remaining amount of the urea aqueous solution based on an output signal of the level sensor 120 processed by the lowpass filter 1, and a start prohibiting unit 3 in deficiency of the urea aqueous solution configured to prohibit the engine from being started when the remaining amount of the urea aqueous solution is less than a lowerlimit value.

The remaining amount indicator 2 is configured by a liquid crystal or light emitting diode, and is installed in a cabin of a vehicle, for example, a console panel. An indication content of the remaining amount indicator 2 is edited by a remaining amount indication control unit 4. The remaining amount indication control unit 4 outputs a remaining amount by a pointer, a bar graph, and the like, and a warning of the deficiency of the urea aqueous solution to the remaining amount indicator 2.

The lowpass filter 1 is configured by a digital filter. The time constant of the lowpass filter 1 is set to 0 in the range of the engine rpm of 0 to a cranking rpm and is set to increase with the increase in the engine rpm over the cranking rpm. In detail, a filter coefficient to give the time constant for each engine rpm is set in a time constant map 5 referred to as the engine rpm. The filter coefficient is provided in the digital filter, and as a result, a signal response characteristic of the lowpass filter 1 is determined.

The level sensor 120 includes a scale 6 that stands in the urea aqueous solution tank 105, a plurality of approximate sensors (not illustrated) arranged in parallel vertically in the scale 6, and a float 7 that floats on a solution level S of the urea aqueous solution and is movable with the scale 6, and is configured to detect the position of the approximate sensor that detects the float 7 as the height of the solution level S.

In detail, as illustrated in Fig. 2, the SCR system 100 primarily includes an SCR apparatus 103 provided in the exhaust pipe 102 of the engine E, a dosing valve (a urea aqueous solution injecting device, a dosing module) 104 configured to inject the urea aqueous solution upstream of the SCR apparatus 103 (the exhaust gas), a urea aqueous solution tank 105 configured to retain the urea aqueous solution, a supply module 106 configured to supply the urea aqueous solution retained in the urea aqueous solution tank 105 to the dosing valve 104, and a DCU (dosing control unit) 126 configured to control the dosing valve 104 or the supply module 106.

The lowpass filter 1, the start prohibiting unit 3 in deficiency of the urea aqueous solution, the remaining amount indication control unit 4, and the time constant map 5 may be provided in the DCU 126.

In the exhaust pipe 102 of the engine E, a DOC (diesel oxidation catalyst) 107, a DPF (diesel particulate filter) 108, and the SCR apparatus 103 are sequentially arranged from upstream to downstream of the exhaust gas. The DOC 107 oxidizes NO in the exhaust gas exhausted from the engine E to form NO₂ and is used to improve denitration efficiency in the SCR apparatus 103 by controlling a ratio of NO and NO₂ in the exhaust gas. Further, the DPF 108 is used to collect PM (particulate matter) in the exhaust gas.

The dosing valve 104 is provided in the exhaust pipe 102 upstream of the SCR apparatus 103. The dosing valve 104 has a structure in which an injection hole is provided in a cylinder filled with high-pressure urea aqueous solutions and a valve body clogging the injection hole is attached to a plunger, and is configured to inject the urea aqueous solution by making the valve body be spaced apart from the injection hole by raising the plunger through electrical conduction to a coil. When the electrical conduction to the coil stops, the plunger is dropped by internal elastic force, and as a result, the valve body clogs the injection hole, thereby stopping the injection of the urea aqueous solution.

An exhaust temperature sensor 109 configured to measure the temperature of the exhaust gas at an inlet of the SCR apparatus 103 (the temperature of an inlet of the SCR) is provided in the exhaust pipe 102 upstream of the dosing valve 104. Further, an upstream NOx sensor 110 configured to detect a NOx concentration upstream of the SCR apparatus 103 is provided upstream of the SCR apparatus 103 (herein, upstream of the exhaust temperature sensor 109), and a downstream NOx sensor 111 configured to detect the NOx concentration downstream of the SCR apparatus 103 is provided downstream of the SCR apparatus 103.

The supply module 106 includes an SM pump 112 configured to pump the urea aqueous solution, an SM temperature sensor 113 configured to measure the temperature of the supply module 106 (the temperature of the urea aqueous solution that flows in the supply module 106), a urea aqueous solution pressure sensor 114 configured to measure the pressure of the urea aqueous solution in the supply module 106 (the pressure at a discharge side of the SM pump 112), and a reverting valve 115 configured to switch supplying the urea aqueous solution from the urea aqueous solution tank 105 to the dosing valve 104 or reverting the urea aqueous solution in the dosing valve 104 to the urea aqueous solution tank 105 by switching a path of the urea aqueous solution. Herein, when the reverting valve 115 is in an off state, the urea aqueous solution from the urea aqueous solution tank 105 is configured to be supplied to the dosing valve 104 and when the reverting valve 115 is in an on state, the urea aqueous solution in the dosing valve 104 is configured to be reverted to the urea aqueous solution tank 105.

When the reverting valve 115 is switched to supply the urea aqueous solution to the dosing valve 104, the supply module 106 is configured to feed the urea aqueous solution in the urea aqueous solution tank 105 and suction the fed urea aqueous solution through a solution sending line (suction line) 116, in the SM pump 112, supply the suctioned urea aqueous solution to the dosing valve 104 through a pumping line (pressure line) 117, and revert a remnant urea aqueous solution to the urea aqueous solution tank 105 through a recovery line (back line) 118.

An SCR sensor 119 is provided in the urea aqueous solution tank 105. The SCR sensor 119 includes a level sensor 120 configured to measure the height (level) of the solution level of the urea aqueous solution in the urea aqueous solution tank 105, a temperature sensor 121 configured to measure the temperature of the urea aqueous solution in the urea aqueous solution tank 105, and a quality sensor 122 configured to measure the quality of the urea aqueous solution in the urea aqueous solution tank 105. The quality sensor 122 detects the concentration of the urea aqueous solution or whether a heterogeneous mixture is mixed in the urea aqueous solution, from, for example, a propagation velocity of ultrasonic waves or electrical conductivity, and detects the quality of the urea aqueous solution in the urea aqueous solution tank 105.

A cooling line 123 configured to circulate cooling water for cooling the engine E is connected to the urea aqueous solution tank 105 and the supply module 106. The cooling line 123 passes through the urea aqueous solution tank 105 to exchange heat between the cooling water that flows in the cooling line 123 and the urea aqueous solution in the urea aqueous solution tank 105. Similarly, the cooling line 123 passes through the supply module 106 to exchange heat between the cooling water that flows in the cooling line 123 and the urea aqueous solution in the supply module 106.

A tank heater valve (coolant valve) 124 configured to switch the supply of the cooling water to the urea aqueous solution tank 105 and the supply module 106 is provided in the cooling line 123. Further, the cooling line 123 is connected to even the dosing valve 104, but the cooling water is configured to be supplied to the dosing valve 104 regardless of opening/closing of the tank heater valve 124. Although not illustrated due to simplification of the drawing in Fig. 2, the cooling line 123 is installed along the solution sending line 116, the pumping line 117, and the recovery line 118 through which the urea aqueous solution passes.

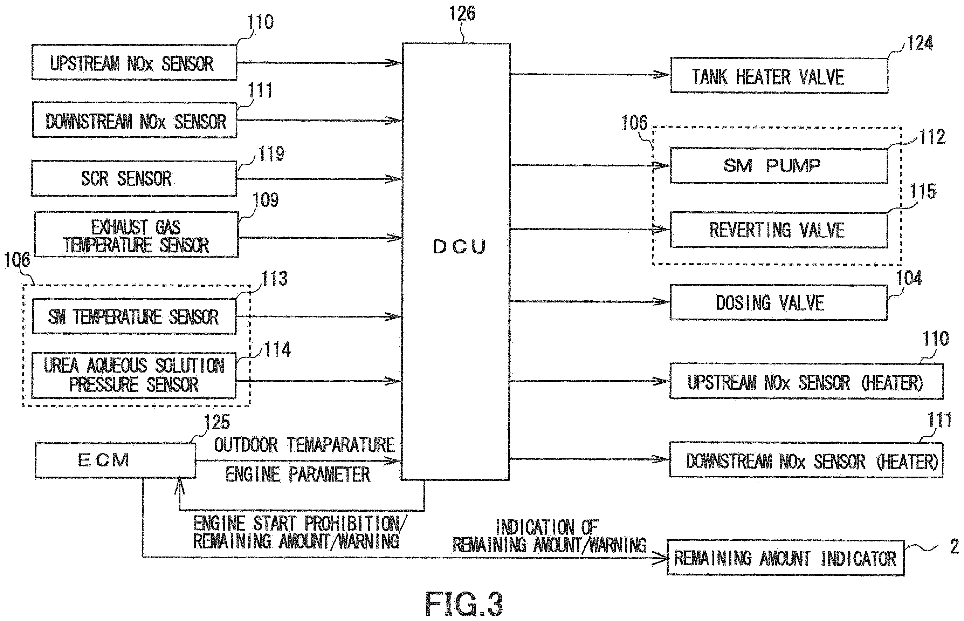

Fig. 3 illustrates an input/output configuration diagram of the DCU 126.

As illustrated in Fig. 3, input signal lines from the upstream NOx sensor 110, the downstream NOx sensor 111, the SCR sensor 119 (the level sensor 120, the temperature sensor 121, and the quality sensor 122), the exhaust temperature sensor 109, the SM temperature sensor 113 and the urea aqueous solution pressure sensor 114 of the supply module 106, and an ECM (engine control module) 125 configured to control the engine E are connected to the DCU 126. Signals of an outdoor temperature and engine parameters (engine rpm, and the like) are input from the ECM 125.

An instruction of the engine start prohibition determined by the start prohibiting unit 3 in deficiency of the urea aqueous solution, the remaining amount, and the warning are output from the DCU 126 to the ECM 125. Information on the remaining amount and the warning is sent from the ECM 125 to the remaining amount indicator 2.

Output signal lines to the tank heater valve 124, the SM pump 112 and the reverting valve 115 of the supply module 106, the dosing valve 104, a heater of the upstream NOx sensor 110, and a heater of the downstream NOx sensor 111 are connected to the DCU 126. An input/output of signals between the DCU 126 and each member may be an input/output through individual signal lines or an input/output through a CAN (controller area network).

The DCU 126 is configured to determine the amount of the urea aqueous solution injected from the dosing valve 104 based on the estimated amount of NOx in the exhaust gas as well as estimating the amount of NOx in the exhaust gas based on signals of the engine parameters from the ECM 125 and the temperature of the exhaust gas from the exhaust temperature sensor 109, and further, control the dosing valve 104 based on a detection value of the upstream NOx sensor 110 and adjust the amount of the urea aqueous solution injected from the dosing valve 104 when the urea aqueous solution is injected at the amount of the urea aqueous solution determined in the dosing valve 104.

Hereinafter, an operation of the SCR system 100 according to the present invention will be described.

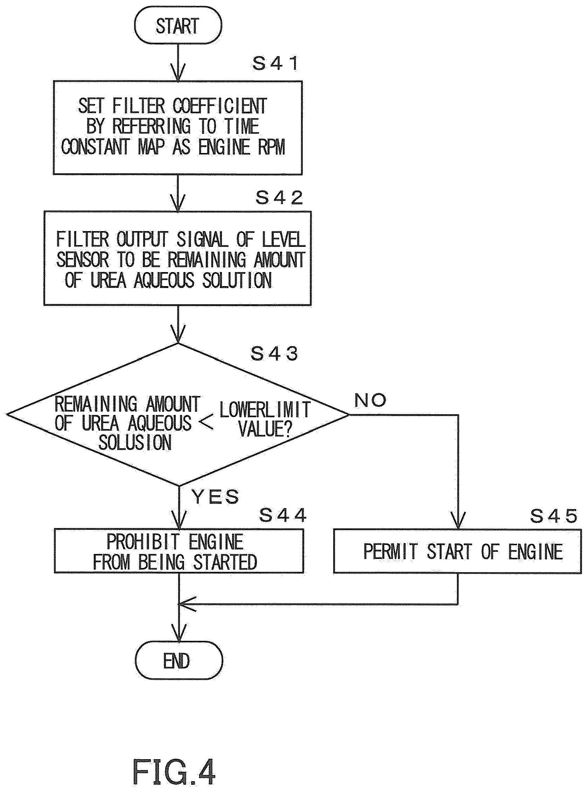

As illustrated in Fig. 4, in step S41, the lowpass filter 1 refers to the time constant map 5 as the engine rpm and sets the filter coefficient. Subsequently, in step S42, the lowpass filter 1 filters the output signal of the level sensor 120 to obtain the remaining amount of the urea aqueous solution.

Subsequently, in step S43, the start prohibiting unit 3 in deficiency of the urea aqueous solution determines whether the remaining amount of the urea aqueous solution is less than the lowerlimit value. In the case of YES, the process proceeds to step S44. In the case of NO, the process proceeds to step S45. In step S44, the start prohibiting unit 3 in deficiency of the urea aqueous solution prohibits the engine E from being started because the remaining amount of the urea aqueous solution is less than the lowerlimit value. Meanwhile, in step S45, the start prohibiting unit 3 in deficiency of the urea aqueous solution permits the start of the engine because the remaining amount of the urea aqueous solution is more than the lowerlimit value.

According to the above sequence, the output signal of the level sensor 120 is filtered to become the remaining amount of the urea aqueous solution and when the remaining amount of the urea aqueous solution is less than the lowerlimit value, the engine E is prohibited from being started. Further, although not illustrated in the sequence, the remaining amount of the urea aqueous solution is indicated by the remaining amount indicator 2 and when the remaining amount of the urea aqueous solution is less than the lowerlimit value, a warning regarding the deficiency of the urea aqueous solution is indicated in the remaining amount indicator 2.

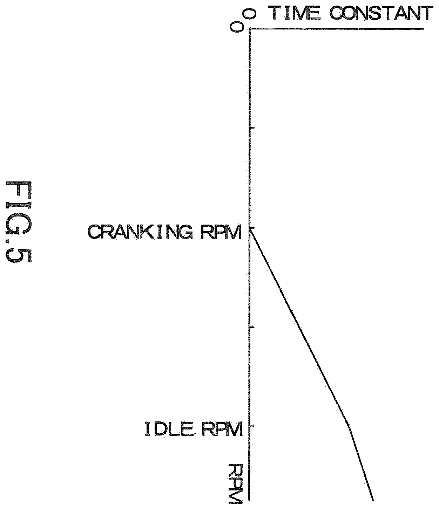

Herein, a filter characteristic of the lowpass filter 1 given by the time constant map 5 and an effect accompanied thereby will be described with reference to Fig. 5.

The time constant of the lowpass filter 1 is 0 in the range of the engine rpm of 0 to the cranking rpm. This is equivalent to a case in which no filter is present and the output signal of the level sensor 120 becomes the remaining amount of the urea aqueous solution as it is. Therefore, the indication of the remaining amount on an actual solution level is followed with delay. Accordingly, when the urea aqueous solution is being filled up, the remaining amount indication is increased together, and as a result, it is not misunderstood that the level sensor 120 breaks down. Further, when the remaining amount indication indicates the deficiency of the urea aqueous solution, the urea aqueous solution is filled in the urea aqueous solution tank 105 to solve the deficiency of the urea aqueous solution without delay, and as a result, the engine start is enabled.

The time constant is increased with the increase in the engine rpm in the range of the cranking rpm to an idle rpm. For example, the time constant in the idle rpm is several seconds. The time constant is gently increased in the idle rpm or more as compared with the range of the cranking rpm to the idle rpm. When the time constant is small around the cranking rpm, so called the filter coefficient is light and an interruption frequency is high. When the time constant is increased, so called the filter coefficient is heavy and the interruption frequency is lowered. As such, since a high-frequency interruption effect by the lowpass filter 1 is shown in the cranking rpm or more, or a situation in which the warning is given or the engine is disabled to be started is prevented, due to the variation in the solution level caused by the vibration of the vehicle. Therefore, for example, when the vehicle stops traveling to be in an idle operation, an influence by the vibration of the engine is removed. Further, while the vehicle travels, an influence of vibration of a vehicle body by the travelling is also removed.

As described above, according to the SCR system 100 of the present invention, since the output signal of the level sensor 120 is processed to be the remaining amount of the urea aqueous solution by using the lowpass filter 1 having the signal response characteristic in which the time constant is small when the engine rpm is low and the time constant is large when the engine rpm is high, improper indication of deficiency of the urea aqueous solution by variation in a solution level in the urea aqueous solution tank 105 and unwanted engine start prohibition can be prevented, and further, engine start prohibition after filling the urea aqueous solution can be rapidly cancelled. When the urea aqueous solution is being filled up, the remaining amount indication is increased together, and as a result, it is not misunderstood that the level sensor 120 breaks down.

### EXPLANATION OF REFERENCE NUMERALS

- 1: lowpass filter
- 2: remaining amount indicator
- 3: start prohibiting unit in deficiency of urea aqueous solution
- 4: remaining amount indication control unit
- 5: time constant map
- 6: scale
- 7: float
- 100: SCR system

## Claims

1. An SCR system (100), comprising:
a urea aqueous solution tank (105) configured to retain a urea aqueous solution to be injected into an exhaust pipe (102) of an engine (E);
a level sensor (120) configured to detect a solution level height in the urea aqueous solution tank (105);
a remaining amount indicator (2) configured to indicate a remaining amount of the urea aqueous solution based on an output signal of the level sensor (120); and
a start prohibiting unit (3) in deficiency of the urea aqueous solution configured to prohibit the engine (E) from being started when the remaining amount of the urea aqueous solution is less than a lowerlimit value;
**characterized by** a lowpass filter (1) processing the output signal of the level sensor (120) and having a signal response characteristic in which a time constant is small when an engine rpm is low and the time constant is larger when the engine rpm is high, with respect to the output signal of the level sensor (120), wherein the time constant is gently increased for the engine rpm being an idle rpm or higher as compared with a range of the engine rpm from a cranking rpm to the idle rpm.

2. The SCR system (100) according to claim 1, wherein the time constant of the lowpass filter (1) is 0 in the range of the engine rpm of 0 to the cranking rpm and increases with the increase in the engine rpm over the cranking rpm.

## Patentansprüche

1. SCR-System (100), umfassend:
einen Harnstofflösungstank (105), der ausgebildet ist, eine in eine Abgasleitung (102) eines Motors (E) einzuspritzende wässrige Harnstofflösung zu speichern;
einen Pegelsensor (102), der ausgebildet ist, eine Lösungspegelhöhe in dem Harnstofflösungstank (105) zu erfassen;
einen Restmengenanzeiger (2), der ausgebildet ist, eine Restmenge der wässrigen Harnstofflösung auf Grundlage eines Ausgabesignals des Pegelsensors (120) anzuzeigen; und
eine in Ermangelung an wässriger Harnstofflösung startverhindernde Einheit (3), die ausgebildet ist, den Motor (E) am Starten zu hindern, wenn die Restmenge an wässriger Harnstofflösung kleiner als ein unterer Grenzwert ist;
**gekennzeichnet durch** ein Tiefpassfilter (1), welches das Ausgabesignal des Pegelsensors (120) verarbeitet und eine Signalantwortcharakteristik hat, bei der bezogen auf das Ausgabesignal des Pegelsensors (120) ein Zeitkonstante klein ist, wenn eine Motordrehzahl gering ist, und die Zeitkonstante groß ist, wenn die Motordrehzahl hoch ist, wobei die Zeitkonstante für eine Motordrehzahl, die gleich einer Leerlaufdrehzahl oder höher ist, moderater ansteigt als für einen Drehzahlbereich, der von einer Anlassdrehzahl bis zu der Leerlaufdrehzahl reicht.

2. SCR-System (100) nach Anspruch 1, wobei die Zeitkonstante des Tiefpassfilters (1) in dem Motordrehzahlbereich von 0 bis zu der Anlassdrehzahl 0 ist und mit Anstieg der Motordrehzahl über die Anlassdrehzahl zunimmt.

## Revendications

1. Système SCR (100) comprenant :
un réservoir de solution aqueuse d'urée (105) configuré pour contenir une solution aqueuse d'urée destinée à être injectée dans un tuyau d'échappement (102) d'un moteur (E) ;
un capteur de niveau (120) configuré pour détecter la hauteur d'un niveau de solution dans le réservoir du niveau de solution aqueuse d'urée (105) ;
un indicateur de quantité restante (2) configuré pour indiquer la quantité restante de la solution aqueuse d'urée, en se fondant sur un signal de sortie émis par le capteur de niveau (120) ; et
une unité d'interdiction de démarrage (3) en cas d'insuffisance de solution aqueuse d'urée configurée pour empêcher le moteur (E) de démarrer lorsque la quantité restante de la solution aqueuse d'urée est inférieure à une valeur inférieure limite ;
**caractérisé par** un filtre passe-bas (1) qui traite le signal de sortie émis par le capteur de niveau (120) et qui possède une caractéristique de réponse au signal, dans lequel une constante de temps est petite lorsque le régime du moteur est bas et la constante de temps est plus grande lorsque le régime du moteur est élevé, par rapport au signal de sortie émis par le capteur de niveau (120), dans lequel la constante de temps augmente doucement lorsque le régime du moteur est au moins un régime de ralenti, par rapport à une gamme de régimes allant du régime de démarrage au régime de ralenti.

2. Système SCR (100) selon la revendication 1, dans lequel la constante de temps du filtre passe-bas (1) est 0 dans la gamme de régimes du moteur allant de 0 au régime de démarrage et augmente parallèlement à l'augmentation du régime du moteur au-dessus du régime de démarrage.
